# FASCICULE DE BREVET EUROPEEN

(11) **EP 3 177 137 B1**
(45) Date de publication et mention de la délivrance du brevet: **18.09.2019**
(21) Numéro de dépôt: 14756094.0
(22) Date de dépôt: 05.08.2014
(51) Int. Cl.: A01K 63/02, A01K 63/04

(54) **SYSTÈME ET PROCÉDÉ POUR LE STOCKAGE DE PRODUITS DE LA MER À L'ÉTAT VIVANT**
SYSTEM UND VERFAHREN ZUR LAGERUNG VON LEBENDEN MEERESFRÜCHTEN
SYSTEM AND METHOD FOR STORING LIVE SEAFOOD

(43) Date de publication de la demande: 14.06.2017
(73) Titulaire: EMYG-Environnement et Aquaculture, 13470 Carnoux-en-Provence (FR)
(72) Inventeur: FAGIANO, Giancarlo, F-13470 Carnoux-en-Provence (FR); LEJEUNE, Armand, F-17170 Saint-Jean-de-Liversay (FR)
(74) Mandataire: Regimbeau
(86) Numéro de dépôt international: PCT/FR2014/052041
(87) Numéro de publication internationale: WO 2016/020579

(56) Documents cités:
- FR-A1- 2 572 252
- JP-A- S6 413 931
- JP-A- H04 173 037
- US-A- 4 089 298

## Description

### Domaine technique de l'invention.

L'invention a pour objet un système et un procédé pour le stockage de produits de la mer à l'état vivant.

Elle concerne le domaine technique du stockage et du transport, à l'état de vivants, de homards, langoustes, crevettes, écrevisses, crabes, poissons, huîtres et crustacés, coquillages, coraux, algues, et de manière générale de tous produits de la mer évoluant en eau salée ou en eau douce.

### État de la technique.

Le stockage et le transport de produits de la mer vivants, que ce soit par voie maritime, aérienne ou terrestre, sont particulièrement délicats. En effet, entre leur lieu de pêche ou de récolte (par exemple sur le continent américain), et leur destination finale de vente (par exemple sur le continent européen), le voyage peut durer plusieurs heures, voire plusieurs jours. A ce jour, dans la majorité des cas, les produits sont congelés durant leur transport. Ils ne sont donc plus vivants sur leur lieu de destination finale. Cet état de congélation a un effet négatif sur la qualité et le goût de ces produits.

On connait par le document US 4.089.298 (TRANS-HOMARD-LANG), une installation permettant de transporter, à l'état vivant, des produits de la mer. Ceux-ci sont introduits à l'état vivant dans des logements tubulaires distincts. Un circuit hydraulique génère une circulation d'eau dans chacun de ces logements. Cette eau en circulation est traitée pour adapter sa composition aux produits stockés.

Cette solution technique est avantageuse dans le sens où elle permet de limiter le poids d'eau à transporter, et donc de réduire les frais de transport. Les produits de la mer n'étant ni enchevêtrés, ni serrés, ni écrasés par les couches supérieures, ni dérangés par la présence immédiate d'autres produits de la mer, ils sont stockés dans des conditions de vie optimale, sans stress ou, à tous le moins, dans des conditions de stress limitées. Cela est essentiel pour préserver les qualités gustatives de la chair des produits de la mer.

Cette installation TRANS-HOMARD-LANG présente cependant de nombreux inconvénients. Tout d'abord, les logements sont solidaires d'une structure qui comprend le circuit hydraulique et le dispositif de traitement de l'eau salée. Les produits de la mer doivent donc être préalablement installés dans des récipients spécifiques en forme d'auge, avant d'être insérés dans les logements. Cela multiplie les tâches devant être effectuées par un opérateur pour stocker/déstocker les produits.

Egalement, il est nécessaire d'obturer de manière étanche chaque logement. Dans la pratique, ces étanchéités ont une durée de vie limitée essentiellement due de l'effet corrosif de l'eau salée sur les joints d'étanchéité.

En outre, de part le circuit hydraulique complexe utilisé (notamment l'emploi de tuyaux d'alimentation et de tuyaux ou orifices de débordement), l'eau doit vraisemblablement stagner dans la partie inférieure des auges. Cette eau stagnante ne peut donc pas être convenablement recyclée. De plus, le diamètre des tuyaux et orifices de débordement limite le débit du flux d'eau traversant les logements. Tout cela contribue à dégrader dans le temps la conservation des produits de la mer.

Enfin, la capacité de stockage de cette installation TRANS-HOMARD-LANG est relativement réduite.

L'invention vise à remédier à cet état des choses tout en conservant les avantages précités.

En particulier, un objectif de l'invention est de proposer un système pour le stockage de produits de la mer à l'état vivant, dont la conception permet de diminuer le nombre de tâches pour leur stockage/déstockage.

Un autre objectif de l'invention est de proposer un système pour le stockage de produits de la mer à l'état vivant dont la conception est simple, peu onéreuse et facilement transportable.

Encore un autre objectif de l'invention est de proposer un système de stockage permettant de conserver dans des conditions optimales des produits de la mer à l'état vivant.

Un objectif supplémentaire de l'invention est de proposer un système pour le stockage de produits de la mer dont la capacité de stockage est supérieure à celle de l'installation TRANS-HOMARD-LANG.

L'invention a également pour objectif de proposer une technique de stockage de produits de la mer permettant de maintenir un état de fraicheur et de vivacité constant entre les individus.

### Divulgation de l'invention.

La solution proposée par l'invention est un système pour le stockage de produits de la mer à l'état vivant, suivant la revendication 1, comportant :
- des logements tubulaires distincts présentant chacun une extrémité amont et une extrémité avale, les produits de la mer étant introduits à l'état vivant dans lesdits logements,
- un circuit hydraulique adapté pour générer une circulation d'eau dans chacun des logements,
- une installation adaptée pour traiter l'eau en circulation, de manière à adapter sa composition aux produits de la mer.

Ce système est remarquable en ce que :
- les logements tubulaires font partie d'au moins un module se présentant sous la forme d'un bloc dans lequel sont réalisés lesdits logements, lequel bloc est réalisé dans un matériau léger de manière à pouvoir être manipulé, à vide, par un opérateur, ledit module étant amovible par rapport au circuit hydraulique et à l'installation de traitement,
- les logements tubulaires ont leur extrémité amont et leur extrémité aval qui sont ouvertes, le flux d'eau généré par le circuit hydraulique pénétrant dans lesdits logements par leur extrémité amont et ressortant par leur extrémité avale, les produits de la mer étant immergés dans ce flux d'eau,
- l'installation est adaptée pour maintenir l'eau qui circule dans les logements, à une température inférieure à 25°C.

Les produits de la mer peuvent maintenant être directement placés dans les logements à l'état vivant, sans qu'il soit nécessaire de les placer préalablement dans des récipients spécifiques. L'opérateur peut donc stocker/déstocker rapidement les produits de la mer dans le module, et ce d'autant plus facilement que ce dernier est aisément manipulable.

Les logements étant débouchants, les zones où l'eau risque de stagner sont considérablement réduites, voire supprimées, ce qui contribue à améliorer les conditions de conservation des produits de la mer. Le flux d'eau susceptible de traverser les logements peut avoir un débit largement supérieur à celui du flux d'eau généré dans l'installation TRANS-HOMARD-LANG.

Ces modules peuvent également être facilement juxtaposés et empilés pour augmenter la densité des produits de la mer à stocker.

En outre, en cas de chocs ou de vibrations, ceux-ci sont tout ou partie amortis par le matériau du module qui présente une bonne capacité d'absorption, et par l'eau contenue dans les logements.

D'autres caractéristiques avantageuses de l'invention sont listées ci-dessous. Chacune de ces caractéristiques peut être considérée seule ou en combinaison avec les caractéristiques remarquables définies ci-dessus :
- Plusieurs modules sont préférentiellement insérés dans un contenant étanche à l'eau, lequel contenant est raccordé au circuit hydraulique de manière à former un bain dans lequel sont immergés tous lesdits modules, ledit circuit hydraulique étant adapté pour générer une circulation d'eau dans ledit contenant et créer un flux d'eau dans chacun des logements, entre leur extrémité amont et leur extrémité avale.
- Les modules peuvent être juxtaposés et empilés à l'intérieur du contenant de manière à former des murs adjacents de modules disposés les uns derrière les autres.
- Certains modules peuvent présenter des logements ayant des dimensions différentes de ceux d'autres modules.
- Le contenant, le circuit hydraulique et l'installation de traitement de l'eau sont préférentiellement installés dans un conteneur parallélépipédique de 6,10 m (20 pieds), 12,19 m (40 pieds) ou 13,72 m (45 pieds), adapté pour être transporté par bateau ou avion.
- Plusieurs contenants peuvent être juxtaposés à l'intérieur du conteneur, chacun desdits contenants étant connecté au circuit hydraulique.
- Le contenant et/ou le conteneur sont avantageusement isothermes.
- L'installation est préférentiellement adaptée pour maintenir l'eau qui circule dans les logements, à une température comprise entre 1°C et 5°C.
- L'installation de traitement de l'eau comprend avantageusement une cuve tampon reliée au circuit hydraulique, un refroidisseur étant immergé dans ladite cuve.
- Ce refroidisseur peut se présenter sous la forme d'un échangeur dans lequel circule de l'air froid généré par un module de climatiseur.
- Chaque module se présente préférentiellement sous la forme d'un bloc dans lequel sont réalisés des logements tubulaires arrangés en rangées et/ou en colonnes et/ou en quinconces.
- L'extrémité aval de chaque logement est préférentiellement obturée partiellement par un moyen d'obturation sécable adapté pour empêcher les produits de la mer de sortir dudit logement, tout en laissant passer le flux d'eau.

Un autre aspect de l'invention concerne un procédé de stockage de produits de la mer à l'état vivant, suivant la revendication 13, consistant à :
- introduire les produits de la mer à l'état vivant dans des logements tubulaires distincts présentant chacun une extrémité amont et une extrémité avale,
- générer une circulation d'eau dans chacun des logements,
- traiter l'eau en circulation, de manière à adapter sa composition aux produits de la mer.

Ce procédé est remarquable en ce qu'il comprend en outre les étapes consistant à :
- réaliser les logements tubulaires dans au moins un module se présentant sous la forme d'un bloc, lesdits logements étant réalisés de sorte que leur extrémité amont et leur extrémité aval soient ouvertes, lequel bloc est réalisé dans un matériau léger de manière à pouvoir être manipulé, à vide, par un opérateur,
- générer un flux d'eau de manière à ce qu'il pénètre dans les logements par leur extrémité amont et ressorte par leur extrémité avale, les produits de la mer étant immergés dans ce flux d'eau,
- maintenir l'eau qui circule dans les logements, à une température inférieure à 25°C.

Préférentiellement, l'eau est directement prélevée sur le lieu de pêche ou de récolte des produits de la mer à l'état vivant.

Et après avoir introduit des produits de la mer à l'état vivant dans chacun des logements, on peut :
- insérer le module dans un contenant étanche à l'eau,
- introduire de l'eau dans le contenant de manière à former un bain dans lequel est immergé le module, et faire circuler en continu l'eau dans ledit contenant de manière à créer un flux d'eau dans chacun des logements, entre leur extrémité amont et leur extrémité avale.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective isométrique d'un module de stockage conforme à l'invention,
- la figure 2 est une vue en coupe selon A-A du module de la figure 1, des homards étant insérés dans les logements,
- la figure 3 est une vue arrière de module de la figure 1, montrant des moyens d'obturation partielle des logements,
- la figure 4 illustre un exemple d'empilement de modules conformes à l'invention,
- la figure 5 schématise une vue en coupe longitudinale d'un système conforme à l'invention, et dans lequel les modules sont insérés dans un contenant, lui-même installé dans un conteneur de transport,
- la figure 6 illustre un système similaire à celui de la figure 5, plusieurs contenants étant installés dans un seul conteneur de transport,
- la figure 7 est une vue schématique de face d'un répartiteur permettant de répartir de manière homogène le flux d'eau dans les différents modules.

### Modes préférés de réalisation de l'invention.

La description qui suit prend l'exemple de homards comme produits de la mer, sans que cela puisse limiter la portée de la présente invention qui s'applique aussi bien à des langoustes, des crevettes, des écrevisses, des rabes, des poissons, des huîtres et crustacés, des coquillages, des coraux, des algues, etc. De façon générale, on entend par produits « de la mer », des produits vivants dans de l'eau salée, ou dans de l'eau de mer.

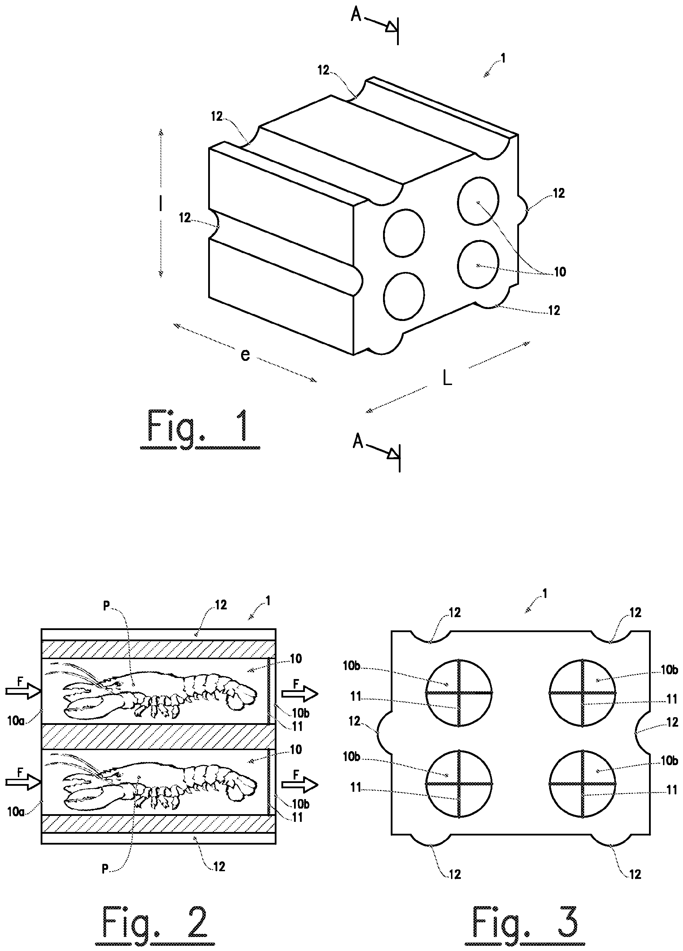

Sur la figure 1, le module 1 conforme à l'invention se présente sous la forme d'un bloc sensiblement parallélépipédique. Sa longueur « L » est par exemple comprise entre 20 cm et 2 m, sa largeur « I » par exemple comprise entre 10 cm et 2 m, et son épaisseur « e » par exemple comprise entre 10 cm et 1 m.

Ce bloc est réalisé dans un matériau léger de manière à pouvoir être manipulé, à vide, par un opérateur seul. Il est préférentiellement réalisé en polymère expansé, du type polystyrène, qui est inerte et qui résiste bien à l'effet corrosif de l'eau salée. On peut également utiliser un bloc creux obtenu par moulage plastique du type polyéthylène. L'utilisation d'un matériau léger permet en outre d'alléger le poids total du système, et donc de diminuer les coûts de transport.

Des logements 10 sont réalisés dans le bloc formant le module 1. Ces logements 10 sont tubulaires, et leur section est préférentiellement circulaire de sorte qu'ils sont cylindriques. Leur diamètre est par exemple compris entre 5 cm et 15 cm. Ils sont rectilignes, horizontaux et s'étendent dans toute l'épaisseur « e » du module 1. Leur longueur correspond donc à cette épaisseur « e ».

Sur les figures annexées, le module 1 comprend quatre logements 10 disposés selon deux rangées horizontales et deux colonnes verticales. Bien évidemment, un nombre supérieur ou inférieur de logements 10 peut être envisagé, lesquels logements peuvent être arrangés en rangées et/ou en colonnes et/ou en quinconces.

Au moins un produit de la mer P étant destiné à être inséré dans le logement 10, la longueur minimale de ce dernier (et donc l'épaisseur « e ») doit correspondre à la longueur d'encombrement du produit de la mer le plus long à transporter (par exemple celle d'un homard), étant précisé que cette longueur d'encombrement correspond à la distance entre les points extrêmes avant et arrière dudit produit P. Le diamètre du logement 10 doit également être adapté aux dimensions du produit P pour que ce dernier ne soit pas comprimé.

Les logements 10 présentent chacun une extrémité amont 10a et une extrémité aval 10b. Ces deux extrémités 10a, 10b sont ouvertes de sorte que les logements 10 sont débouchants sur les faces avant et arrière du module 1.

Comme illustré sur la figure 2, les homards P sont introduits à l'état vivant dans les logements 10. On prévoit de n'insérer qu'un seul homard P par logement 10. Cette configuration permet d'isoler les homards de leurs autres congénères et de ne pas les déranger. Les conditions de stress sont ainsi réduites.

Les homards P sont insérés dans les logements 10 par l'extrémité amont 10a et poussés vers l'extrémité aval 10b. Les homards P se déplaçant en marche arrière, ils ne peuvent pas ressortir par l'extrémité amont 10a. Pour éviter qu'ils ne s'échappent par l'extrémité aval 10b, elle est obturée partiellement par un moyen d'obturation sécable 11. Ce dernier est adapté pour empêcher les homards P de sortir du logement 10, tout en laissant passer le flux d'eau F, sans obstruction.

Sur la figure 3, le moyen d'obturation 11 se présente sous la forme de deux barrettes disposées en X. Ces barrettes peuvent être obtenues lors du moulage du bloc formant le module 1, ou être rapportées. Elles sont par exemple réalisées dans un matériau plastique semi-rigide ou rigide, et leur diamètre est tel qu'elles peuvent facilement être cassées à la main, ou par un mouvement brusque du homard P initié par l'opérateur.

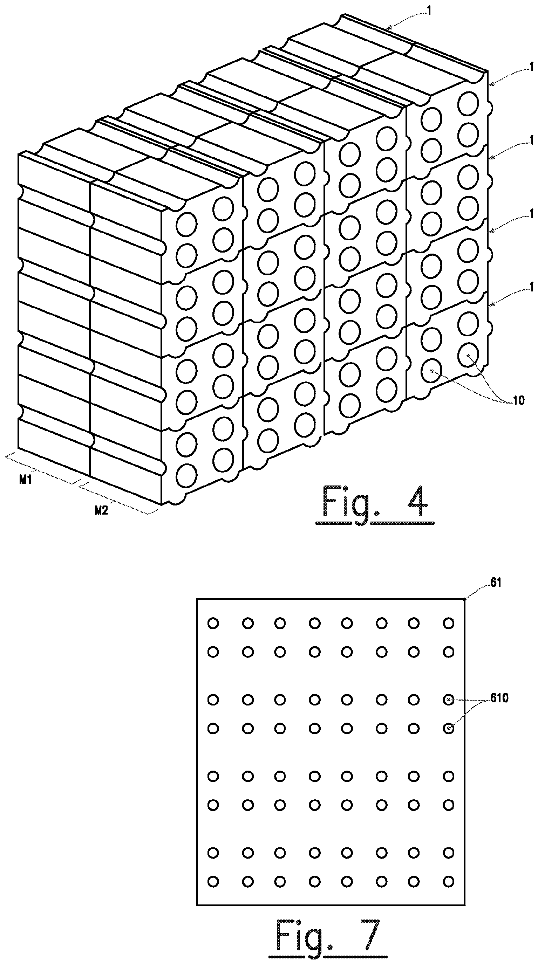

Chaque module 1 est avantageusement pourvu de moyens 12 de positionnement et d'emboitement avec des modules adjacents. Sur les figures 1 et 3, ces moyens 12 sont des gorges et des nervures complémentaires disposées sur les faces latérales du module 1. Ces moyens 12 facilite la mise en position et le maintien des modules 1 lorsqu'ils sont juxtaposés et empilés de manière à former une série de murs M1, M2 adjacents disposés les uns derrières les autres (figure 4). Chaque mur M1, M2 peut atteindre plusieurs mètres de hauteur et de longueur. Ils sont formés de plusieurs modules 1 disposés aussi bien en colonnes verticales qu'en rangées horizontales.

En pratique, on érige un premier mur M1 de modules 1 que l'on remplit de homards. Les homards sont introduits manuellement, un par un, dans les logements 10, avant, pendant, ou après le montage du mur M1. Une fois que le premier mur M1 est rempli de homards, on érige de la même façon un second mur M2 de modules 1 devant le premier mur M1. Et ainsi de suite pour les autres murs successifs.

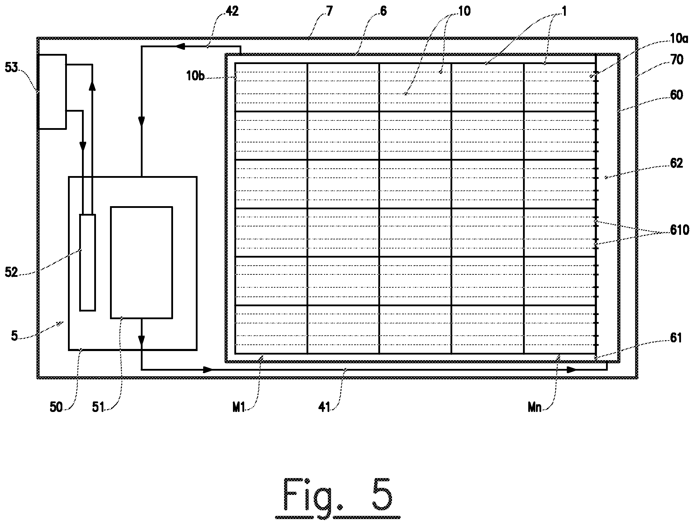

Les modules 1 étant identiques, les logements 10 de modules 1 juxtaposés appartenant à des murs juxtaposés sont dans le même alignement (figure 5). Ainsi, les moyens d'obturation 11 des modules 1 d'un mur (ex : M2) sont en vis-à-vis des ouvertures amonts 10a des logements 10 des modules 1 du mur juxtaposé qui le précède (ex: M1). En usage, chaque logement 10 est donc obturé au niveau de son extrémité aval 10b : par son propre moyen d'obturation 11 ; et au niveau de son extrémité amont 10a : par le moyen d'obturation 11 du logement qui lui succède.

Chaque module 1 peut être repéré par un moyen de repérage du type code barre, ou puce RFID. Ce moyen de repérage permet par exemple de renseigner la nature des produits P, leur date et lieu de pêche, leur destination, etc. Ils favorisent ainsi une bonne organisation dans le rangement des modules 1 et/ou lors de leur déchargement.

Une circulation d'eau est générée dans chacun des logements 10. Cette circulation, ou flux, est schématisée par la flèche référencée F sur la figure 2. Il pénètre dans le logement 10 par l'extrémité amont 10a et ressort par l'extrémité aval 10b. Il est tel que le produit P est totalement immergé dans ce flux F. Dans le cas d'un homard, ce dernier est donc soumis à un courant d'eau orienté de sa tête vers sa queue. Un tel courant contribue à faire diminuer l'état de stress de l'animal. Le débit d'eau circulant dans les logements 10 peut varier entre 1 L/min et 100 L/min. L'effet de ce courant, combiné à la configuration ouverte des extrémités 10a et 10b, évite toute sédimentation pour une meilleure filtration et, comme expliqué plus avant dans la description, assure une répartition homogène de l'oxygène et de la température à l'ensemble de la masse d'eau circulant dans le logement 10.

L'eau utilisée est généralement de l'eau salée, mais peut également être de l'eau douce selon l'espèce de produits à transporter, par exemple dans le cas d'écrevisses. Toujours dans le but de mettre les produits de la mer dans des conditions de transport optimales, il est avantageux d'utiliser l'eau directement prélevée sur le lieu de pêche ou de récolte desdits produits. Sur la figure 5, cette eau est stockée dans une cuve tampon 50 dont les dimensions sont adaptées à la capacité finale de stockage des produits P.

L'eau contenue dans la cuve 50 est acheminée vers les modules 1 au moyen d'un circuit hydraulique. Ce dernier est adapté pour générer le flux d'eau F dans chacun des logements 10. L'eau retourne ensuite dans la cuve 50. L'eau circule ainsi en circuit fermé, pour une qualité d'eau optimale.

Sur la figure 5, le circuit hydraulique se compose d'une ou plusieurs canalisations d'entrée 41 acheminant l'eau de la cuve 50 vers les modules 1, et d'une ou plusieurs canalisations de retour 42 qui acheminent l'eau des modules 1 vers la cuve 3. Le circuit hydraulique comprend également une ou plusieurs pompes ainsi que des organes de régulation du type vanne manuelle, électropneumatique et/ou électrique.

Une installation 5 permet de traiter l'eau en circulation, de manière à adapter sa composition aux produits de la mer P logés dans les modules 1. Cette installation 5 est adaptée pour contrôler les caractéristiques physico-chimique de l'eau pénétrant dans les modules 1 par la canalisation d'entrée 41, et notamment : sa salinité, son pH, son oxygène, et d'autres composés minéraux et/ou nutritifs. Elle permet également d'éliminer des polluants, particules et organismes nuisibles à la conservation des produits P, tels que bactéries, limons, supports bactérien, etc.

L'installation 5 comprend, outre la cuve 50, un appareil 51 qui assure simultanément au moins les fonctions de filtration, d'oxygénation et d'homogénéisation de l'eau circulant dans ledit appareil. On utilise préférentiellement un appareil du type commercialisé par la société EMYG sous la marque SKIM®. Cet appareil est immergé dans la cuve 50. Il est notamment décrit dans les documents brevets FR2957566 (EMYG) et US2003/164340 (LEJEUNE) auxquels l'homme du métier pourra se référer en cas de besoin. On peut également utiliser un appareil de filtration et d'oxygénation disposé hors de la cuve 50, et du type commercialisé par la société EMYG sous la marque PROTOS®. Ce type d'appareil est situé hors de la cuve 50. Il est notamment décrit dans le document brevet FR2957566 précité auquel l'homme du métier pourra se référer en cas de besoin.

Une sursaturation de l'eau en oxygène comprise entre 60% et 120% de la saturation de l'air atmosphérique en oxygène permet d'assurer une longue conservation des produits de la mer P.

Pour préserver de manière optimale la qualité des produits de la mer P, l'eau qui circule dans les logements 10 est maintenue à une température inférieure à 25°C, avantageusement entre 1°C et 5°C, préférentiellement entre 1°C et 3°C. Ces températures froides plongent les produits de la mer P à la fois dans un état de quasi-immobilité et dans un état de relaxation, ce qui les empêche de stresser lorsqu'ils sont soumis aux stimuli générés par le transport (vibrations, bruits, chocs, ...).

La régulation de la température de l'eau est effectuée par l'installation 5. A cet effet, celle-ci comprend un refroidisseur 52 immergé dans la cuve 50. Ce refroidisseur 52 se présente sous la forme d'un échangeur dans lequel circule de l'air froid généré par un module de climatiseur 53. Celui-ci est du type habituellement utilisé pour climatiser l'intérieur d'un conteneur de transport 7. Sa conception étant connue, elle ne sera pas expliquée plus en détail dans la présente description. Toutefois, l'homme du métier pourra se référer, en cas de besoin, au document brevet FR2957566 précité.

La salinité et le pH de l'eau sont également régulés conformément à la technique décrite dans le document brevet FR2957566 précité.

L'apport de minéraux et/ou d'éléments nutritifs peut être réalisé dans la cuve 50 ou ailleurs dans le circuit hydraulique. Des capteurs appropriés permettent de mesurer la concentration de minéraux et/ou d'éléments nutritifs dans l'eau. Cette mesure est effectuée de manière continue ou périodique. En fonction de ces mesures, et notamment si celles-ci sont inférieures à des valeurs de consigne, une pompe doseuse injecte dans l'eau, une dose de minéraux et/ou d'éléments nutritifs. Cette dose peut être liquide ou solide, et se présenter sous forme de pastilles ou de poudre soluble par exemple.

Les modules 1 peuvent être directement insérés dans un conteneur de transport 7. Ce dernier est connu et standardisé. Il a une forme généralement parallélépipédique, a une longueur de 6,10 m (20 pieds), 12,19 m (40 pieds) ou 13,72 m (45 pieds). Il est accessible par une porte étanche 70, et il est adapté pour être transporté par bateau ou par avion. Certains de ces conteneurs étant étanches, résistant à la corrosion de l'eau de mer, et isothermes, leur utilisation convient pour l'invention. Dans ce cas, pour des raisons d'étanchéité, il est préférable de déporter l'installation de traitement 5 hors du conteneur. Cela peut être problématique, notamment pour des raisons d'encombrement et de sécurité.

Comme illustré sur la figure 5, on préfère insérer les modules 1, le circuit hydraulique 41, 42 et l'installation 5, directement dans un conteneur 7 parallélépipédique de 6,10 m (20 pieds), 12,19 m (40 pieds) ou 13,72 m (45 pieds), adapté pour être transporté par bateau ou avion. Plus particulièrement, les modules 1 sont juxtaposés et empilés à l'intérieur d'un contenant 6 qui est étanche à l'eau. Les modules 1 sont ainsi rendus totalement amovibles par rapport au circuit hydraulique 41, 42 et à l'installation 5.

Sur la figure 5, le contenant 6 a une forme parallélépipédique dont les dimensions lui permettent d'être inséré dans le conteneur 7. Il peut être réalisé en plastique, par exemple par moulage, ou en acier inoxydable, par exemple par soudage ou rivetage de plaques. Il présente une porte étanche 60, disposée en vis-à-vis de la porte 70 du conteneur 7, et par laquelle sont insérés les modules 1. Avantageusement, le contenant 6 et/ou le conteneur 7 sont isothermes de manière à diminuer les déperditions thermiques de l'eau froide circulant dans les modules 1 et/ou limiter les chocs thermiques dus aux conditions climatiques extérieures.

Le contenant 6 est raccordé au circuit hydraulique 41, 42 de manière à former un bain dans lequel sont immergés tous les modules 1. Tous les logements 10 sont ainsi remplis d'eau et les homards P immergés. Le circuit hydraulique génère une circulation d'eau dans le contenant 6 et, comme illustré sur la figure 2, crée un flux d'eau F dans chacun des logements 10, entre leur extrémité amont 10a et leur extrémité aval 10b. La période est très courte entre le moment où les homards P sont rangés dans les logements 10 et le moment où l'eau est mise en circulation dans le contenant 10. Le temps d'exposition des homards à l'air libre est minimal.

Pour être certain de remplir totalement le contenant 6 : - la canalisation d'entrée 41 débouche au niveau du sol dudit contenant, devant les extrémités amont des modules 1 du dernier mur Mn ; - et la canalisation de retour 42 débouche au niveau du plafond, derrière les extrémités aval des modules 1 du premier mur M1.

Dans la configuration de la figure 5, la circulation d'eau dans le contenant 6, entre les deux canalisations 41, 42, assure une bonne réparation du flux F dans chacun des modules 1. Le volume d'eau en circulation dans le contenant 6 est minimal, et correspond uniquement au volume cumulé des logements 10, moins le volume cumulé des homards P. On peut atteindre un ratio (poids_{(produits)}/poids_{(produit+eau)}) compris entre 40 % et 70%, et généralement supérieur à 50%.

La réparation du flux F dans les logements 10 est améliorée en installant un répartiteur 61 de débit devant les extrémités amont des modules 1 du dernier mur Mn. Sur les figures 5 et 7, ce répartiteur 61 consiste en une plaque perforée, positionnée de manière étanche dans le contenant 6, en appui contre les modules 1 du mur Mn. Cette plaque est réalisée dans le même matériau que celui du contenant 6. Le répartiteur 61 est décalé de la porte 60 de manière à délimiter une chambre 62 dans laquelle débouche la canalisation d'entrée 41. C'est donc la chambre 62 qui se remplit d'abord d'eau.

Comme cela apparait sur la figure 7, la plaque formant le répartiteur 61 est perforée, les perforations 610 coïncidant avec les extrémités amont 10a des modules 1 du dernier mur Mn. L'eau contenue dans la chambre 62 se répartit ainsi de manière homogène dans chacun des logements 10.

Pour améliorer davantage cette répartition du flux d'eau, certains modules 1 peuvent présenter des logements 10 ayant des dimensions différentes de ceux d'autres modules. Dans l'exemple de la figure 5, les logements des modules 1 situés en bas du contenant 6 reçoivent, en pratique, un débit d'eau plus important que ceux des modules situés en haut dudit contenant. Pour équilibrer les débits, les logements des modules 1 situés en bas du contenant 6 pourront avoir un diamètre plus petit que ceux des modules 1 situés en haut dudit contenant. Un résultat identique est obtenu en dimensionnant de manière similaire les perforations 610 du répartiteur 61.

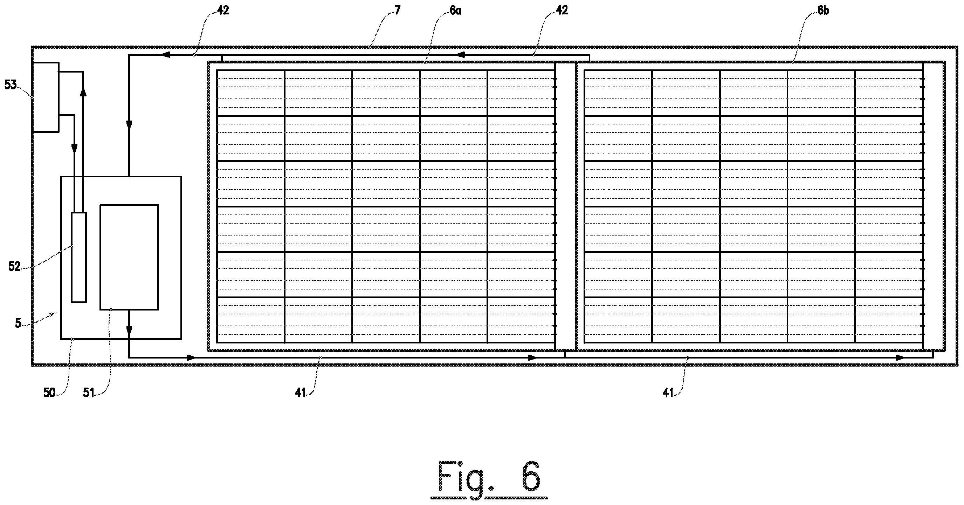

Sur la figure 6, plusieurs contenants 6a, 6b sont juxtaposés à l'intérieur du conteneur 7 pour multiplier la capacité de stockage. Cette configuration est notamment retenue lorsque le conteneur 7 est suffisamment grand, par exemple un conteneur de 12,19 m (40 pieds) ou de 13,72 m (45 pieds). Chacun des contenants 6a, 6b est connecté au circuit hydraulique 41, 42, lui-même agencé avec l'installation 5.

L'énergie électrique nécessaire au fonctionnement de l'installation 6 et aux pompes utilisées pour la mise en circulation de l'eau dans le circuit hydraulique provient d'une ou plusieurs batteries et/ou de panneaux solaires, et ou d'une connexion électrique à un réseau électrique embarqué dans le navire ou l'avion de transport, et permettant d'alimenter le conteneur 7 en courant.

Lorsque le conteneur 7 arrive à destination, il suffit, après vidange du contenant 6, de démonter les murs M1, Mn pour récupérer les modules 1 avec leurs homards P. En brisant les moyens d'obturation 11, ces derniers peuvent être facilement recueillis. Les homards P peuvent alors être directement vendus aux consommateurs finaux, ou être placés en vivier. Ici encore, la période pendant laquelle les homards sont à l'air libre est très courte.

Le système qui vient d'être décrit permet de réduire le taux de mortalité inférieur à 5%, notamment inférieur à 2%, pendant un transport des produits P de plusieurs semaines. Dans le cas des homards, leur faible état de stress durant le transport se traduit par une bonne vivacité et des mouvements énergiques au moment de leur sortie des logements 10. Les couleurs sont vives, les queues ont une bonne courbure et les pinces sont vaillantes, à la recherche du combat.

Cuits pochés, les carapaces sont pleines et dense, leur chair ferme et goûteuse. Les arômes iodés de présentent aucun goût ni odeur ammoniaqués souvent synonymes de crustacés en stress et en perdition.

Cuits entiers au four, des homards stressés ou en perdition subissant ce mode de cuisson sont en condition de liquéfaction du fait de la pénétration plus lente de la température au coeur du produit. Dans le cas présent, aucune liquéfaction n'a été observée. Après décorticage, les homards sont pleins et charnus, leur goût attestant d'une parfaite fraîcheur identique à des homards fraîchement péchés en pleine mer.

Cuits grillés, coupés en deux à la plancha, leur carapace découpée à cru sur la longueur laisse apparaitre un corail ferme et de couleur vive. Dense dans leur carapace, aucun signe de liquéfaction des intérieurs n'a été constaté. Au contraire, sous l'effet du sel, une agitation des chairs souligne une grande vivacité.

Tous les homards présentent le même état de fraîcheur et de vivacité. Aucune disparité significative n'a été constatée.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Le bloc formant le module 1 n'a pas nécessairement une forme parallélépipédique. Il peut être de forme hexagonale ou cylindrique, par exemple.
- Les logements 10 ne sont pas nécessairement cylindriques. Ils peuvent être tubulaires mais avec une section ovale, carrée, rectangulaire, polygonale, etc. Ils peuvent également être coniques. Ils ne sont pas non plus nécessairement rectilignes ni horizontaux, mais peuvent présenter certaines courbures et/ou être inclinés, leur forme et/ou orientation étant adaptés à l'espèce à transporter.

- Plusieurs produits de la mer P peuvent être introduits à l'état vivant dans chaque logement 10. Notamment pour le transport de crevettes, d'huîtres, d'algues, de coquillages ou de coraux, où une concentration supérieure à un spécimen par logement 10 est acceptable, en prenant toutefois soin de ne pas les serrer, ni les écraser.
- Les barrettes formant le moyen d'obturation 10 peuvent être agencées sous forme de grilles ou de grillage.
- Les modules 1 ne sont pas nécessairement rangés dans des conteneurs transportables, mais peuvent être logés dans des armoires de transport plus petites. Ils peuvent en tout état de cause être rangés dans des armoires fixes lorsque les produits de la mer P ne sont pas destinés à être transportés, mais seulement stockés.
- Plusieurs cuves tampons 3 peuvent être employées. On peut par exemple prévoir une cuve d'eau de mer, et une cuve d'eau douce, chacune de ces cuves permettant d'alimenter des modules contenant des espèces différentes (par ex : homards d'un part, et écrevisses d'autre part).
- Le contenant 6 peut être amovible ou fixe par rapport au conteneur 7. Dans le cas d'un contenant 6 fixe, celui-ci peut être délimité en rapportant des parois étanches à l'intérieur du conteneur 7.
- Lorsque plusieurs contenants 6a, 6b sont insérés dans un même conteneur 7, ils peuvent être connectés à leur propre circuit hydraulique et à leur propre installation de traitement. De cette manière, un de ces contenants peut recevoir des produits vivants dans de l'eau salée (ex : homards ou crevettes), le ou les autres pouvant recevoir des produits vivants dans de l'eau douce (ex : écrevisses).

## Revendications

1. Système pour le stockage de produits de la mer à l'état vivant, comportant :
- des logements tubulaires (10) distincts présentant chacun une extrémité amont (10a) et une extrémité aval (10b), les produits de la mer (P) étant introduits à l'état vivant dans lesdits logements,
- un circuit hydraulique (41, 42) adapté pour générer une circulation d'eau dans chacun des logements (10),
- une installation (5) adaptée pour traiter l'eau en circulation, de manière à adapter sa composition aux produits de la mer (P),
**caractérisé en ce que :**
- les logements tubulaires (10) font partie d'au moins un module (1) se présentant sous la forme d'un bloc dans lequel sont réalisés lesdits logements, lequel bloc est réalisé dans un matériau léger de manière à pouvoir être manipulé, à vide, par un opérateur, ledit module étant amovible par rapport au circuit hydraulique (41, 42) et à l'installation de traitement (5),
- les logements tubulaires (10) ont leur extrémité amont (10a) et leur extrémité aval (10b) qui sont ouvertes, le flux d'eau (F) généré par le circuit hydraulique pénétrant dans lesdits logements par leur extrémité amont (10a) et ressortant par leur extrémité aval (10b), les produits de la mer (P) étant immergés dans ce flux d'eau,
- l'installation (5) est adaptée pour maintenir l'eau qui circule dans les logements (10), à une température inférieure à 25°C.

2. Système selon la revendication 1, dans lequel plusieurs modules (1) sont insérés dans un contenant (6) étanche à l'eau, lequel contenant est raccordé au circuit hydraulique (41, 42) de manière à former un bain dans lequel sont immergés tous lesdits modules, ledit circuit hydraulique étant adapté pour générer une circulation d'eau dans ledit contenant et créer un flux d'eau (F) dans chacun des logements (10), entre leur extrémité amont (10a) et leur extrémité aval (10b).

3. Système selon la revendication 2, dans lequel les modules (1) sont juxtaposés et empilés à l'intérieur du contenant (6) de manière à former des murs (M1, M2) adjacents de modules disposés les uns derrière les autres.

4. Système selon l'une des revendications 2 ou 3, dans lequel certains modules (1) présentent des logements (2) ayant des dimensions différentes de ceux d'autres modules.

5. Système selon l'une des revendications 2 à 4, dans lequel : le contenant (6), le circuit hydraulique (41, 42) et l'installation de traitement de l'eau (7) sont installés dans un conteneur (7) parallélépipédique de 6,10 m (20 pieds), 12,19 m (40 pieds) ou 13,72 m (45 pieds), adapté pour être transporté par bateau ou avion.

6. Système selon la revendication 5, dans lequel plusieurs contenants (6a, 6b, 6c) sont juxtaposés à l'intérieur du conteneur (7), chacun desdits contenants étant connecté au circuit hydraulique (41, 42).

7. Système selon l'une des revendications 5 ou 6, dans lequel le contenant (6) et/ou le conteneur (7) sont isothermes.

8. Système selon l'une des revendications précédentes, dans lequel l'installation (5) est adaptée pour maintenir l'eau qui circule dans les logements (10), à une température comprise entre 1°C et 5°C.

9. Système selon l'une des revendications précédentes, dans lequel l'installation (5) de traitement de l'eau comprend une cuve tampon (50) reliée au circuit hydraulique (41, 42), un refroidisseur (52) étant immergé dans ladite cuve.

10. Système selon la revendication 9, dans lequel le refroidisseur (52) se présente sous la forme d'un échangeur dans lequel circule de l'air froid généré par un module de climatiseur (53).

11. Système selon l'une des revendications précédentes, dans lequel chaque module (1) se présente sous la forme d'un bloc dans lequel sont réalisés des logements tubulaires (10) arrangés en rangées et/ou en colonnes et/ou en quinconces.

12. Système selon l'une des revendications précédentes, dans lequel l'extrémité aval (10b) de chaque logement (10) est obturée partiellement par un moyen d'obturation sécable (11) adapté pour empêcher les produits de la mer (P) de sortir dudit logement, tout en laissant passer le flux d'eau (F).

13. Procédé de stockage de produits de la mer à l'état vivant, consistant à :
- introduire les produits de la mer (P) à l'état vivant dans des logements (10) tubulaires distincts présentant chacun une extrémité amont (10a) et une extrémité aval (10b),
- générer une circulation d'eau dans chacun des logements (10),
- traiter l'eau en circulation, de manière à adapter sa composition aux produits de la mer (P),
**caractérisé en ce que** ledit procédé comprend les étapes consistant à :
- réaliser les logements tubulaires (10) dans au moins un module (1) se présentant sous la forme d'un bloc, lesdits logements étant réalisés de sorte que leur extrémité amont (10a) et leur extrémité aval (10b) soient ouvertes, lequel bloc est réalisé dans un matériau léger de manière à pouvoir être manipulé, à vide, par un opérateur,
- générer un flux d'eau (F) de manière à ce qu'il pénètre dans les logements (10) par leur extrémité amont (10a) et ressorte par leur extrémité aval (10b), les produits de la mer (P) étant immergés dans ce flux d'eau (F),
- maintenir l'eau qui circule dans les logements (10), à une température inférieure à 25°C.

14. Procédé selon la revendication 13, dans lequel l'eau est directement prélevée sur le lieu de pêche ou de récolte des produits de la mer (P), à l'état vivant.

15. Procédé selon l'une des revendications 13 ou 14, dans lequel, après avoir introduit des produits de la mer (P) à l'état vivant dans chacun des logements (10), ledit procédé consiste à :
- insérer le module (1) dans un contenant (6) étanche à l'eau,
- introduire de l'eau dans le contenant (6) de manière à former un bain dans lequel est immergé le module (1), et faire circuler en continu l'eau dans ledit contenant de manière à créer un flux d'eau (F) dans chacun des logements (10), entre leur extrémité amont (10a) et leur extrémité aval (10b).

## Patentansprüche

1. System zur Lagerung von lebenden Meeresfrüchten, umfassend:
- getrennte rohrförmige Aufnahmen (10), die jeweils ein stromaufwärtiges Ende (10a) und ein stromabwärtiges Ende (10b) aufweisen, wobei die Meeresfrüchte (P) im lebenden Zustand in die Aufnahmen eingeführt werden,
- einen Hydraulikkreislauf (41, 42), der geeignet ist, in jeder der Aufnahmen (10) einen Wasserkreislauf zu erzeugen,
- eine Anlage (5), die geeignet ist, das umlaufende Wasser so zu behandeln, dass es seine Zusammensetzung an die Meeresfrüchte (P) anpasst,
**dadurch gekennzeichnet, dass**:
- die rohrförmigen Aufnahmen (10) Teil zumindest eines Moduls (1) sind, das die Form eines Blocks aufweist, in dem die Aufnahmen ausgeführt sind, wobei der Block aus einem leichten Werkstoff hergestellt ist, so dass er im Leerzustand von einem Bediener gehandhabt werden kann, wobei das Modul in Bezug auf den Hydraulikkreis (41, 42) und die Behandlungsanlage (5) abnehmbar ist,
- die rohrförmigen Aufnahmen (10) ihr stromaufwärtiges Ende (10a) und ihr stromabwärtiges Ende (10b) aufweisen, die offen sind, wobei der vom Hydraulikkreis erzeugte Wasserstrom (F) in die Aufnahmen durch ihr stromaufwärtiges Ende (10a) eintritt und durch ihr stromabwärtiges Ende (10b) austritt, wobei die Meeresfrüchte (P) in diesen Wasserstrom eingetaucht sind,
- die Anlage (5) so angepasst ist, dass sie das in den rohrförmigen Aufnahmen (10) umlaufende Wasser auf einer Temperatur unter 25 °C hält.

2. System nach Anspruch 1, wobei mehrere Module (1) in einen wasserdichten Behälter (6) eingesetzt sind, wobei der Behälter so mit dem Hydraulikkreislauf (41, 42) verbunden ist, dass ein Bad gebildet wird, in das alle Module eingetaucht sind, wobei der Hydraulikkreislauf geeignet ist, einen Wasserumlauf in dem Behälter zu erzeugen und einen Wasserstrom (F) in jeder der rohrförmigen Aufnahmen (10) zwischen ihrem stromaufwärtigen Ende (10a) und ihrem stromabwärtigen Ende (10b) zu schaffen.

3. System nach Anspruch 2, wobei die Module (1) nebeneinander angeordnet und im Behälter (6) gestapelt sind, um anschließende Wände (M1, M2) von hintereinander angeordneten Modulen zu bilden.

4. System nach einem beliebigen der vorstehenden Ansprüche 2 oder 3, wobei einige Module (1) Aufnahmen (2) mit Abmessungen aufweisen, die sich von denen anderer Module unterscheiden.

5. System nach einem beliebigen der vorstehenden Ansprüche 2 bis 4, wobei: der Behälter (6), der Hydraulikkeislauf (41, 42) und die Wasseraufbereitungsanlage (7) in einem quaderförmigen Container (7) mit 6,10 m (20 Fuß), 12,19 m (40 Fuß) oder 13,72 m (45 Fuß) eingebaut sind, der zum Transport per Schiff oder Flugzeug geeignet ist.

6. System nach Anspruch 5, wobei mehrere Behälter (6a, 6b, 6c) im Container (7) nebeneinander angeordnet sind, wobei jeder der Behälter mit dem Hydraulikkreislauf (41, 42) verbunden ist.

7. System nach einem beliebigen der vorstehenden Ansprüche 5 oder 6, wobei der Behälter (6) und/oder der Container (7) isothermisch ist.

8. System nach einem beliebigen der vorstehenden Ansprüche, wobei die Anlage (5) so angepasst ist, dass sie das in den Aufnahmen (10) umlaufende Wasser bei einer Temperatur zwischen 1 °C und 5 °C hält.

9. System nach einem beliebigen der vorstehenden Ansprüche, wobei die Wasseraufbereitungsanlage (5) einen Puffertank (50) umfasst, der mit dem Hydraulikkreislauf (41, 42) verbunden ist, wobei ein Kühler (52) in den Tank eingetaucht ist.

10. System nach Anspruch 9, bei dem der Kühler (52) in Form eines Tauschers ausgebildet ist, in dem von einem Klimamodul (53) erzeugte Kaltluft umläuft.

11. System nach einem beliebigen der vorstehenden Ansprüche, wobei jedes Modul (1) die Form eines Blocks hat, in dem in Reihen und/oder Spalten und/oder überkreuz angeordnete rohrförmige Aufnahmen (10) ausgeführt sind.

12. System nach einem beliebigen der vorstehenden Ansprüche, wobei das stromabwärtige Ende (10b) jeder rohrförmigen Aufnahme (10) teilweise durch ein brechbares Verschlussmittel (11) verschlossen ist, das geeignet ist, zu verhindern, dass Meeresfrüchte (P) die Aufnahme verlassen, während der Wasserstrom (F) durchgelassen wird.

13. Verfahren zur Lagerung von lebenden Meeresfrüchten, das aus Folgendem besteht:
- Meeresfrüchte (P) im lebenden Zustand in getrennte rohrförmige Aufnahmen (10) einführen, die jeweils ein stromaufwärtiges Ende (10a) und ein stromabwärtiges Ende (10b) aufweisen,
- Erzeugen eines Wasserkreislaufs in jeder der Aufnahmen (10),
- Behandeln des im Kreislauf umlaufenden Wassers, so dass seine Zusammensetzung an die Meeresfrüchte (P) angepasst ist,
**dadurch gekennzeichnet, dass** das Verfahren aus Folgendem besteht:
- Ausführen der rohrförmigen Aufnahmen (10) in zumindest einem Modul (1) in Form eines Blocks, wobei die Aufnahmen so ausgeführt werden, dass ihr stromaufwärtiges Ende (10a) und ihr stromabwärtiges Ende (10b) offen sind, wobei der Block aus leichtem Werkstoff besteht, so dass er im Leerzustand von einem Bediener gehandhabt werden kann,
- Erzeugen eines Wasserstroms (F), so dass er in die Aufnahmen (10) durch ihr stromaufwärtiges Ende (10a) eintritt und durch ihr stromabwärtiges Ende (10b) austritt, wobei die Meeresfrüchte (P) in diesen Wasserstrom (F) eingetaucht sind,
- Halten des in den Aufnahmen (10) umlaufenden Wassers bei einer Temperatur unter 25 °C.

14. Verfahren nach Anspruch 13, wobei das Wasser direkt an dem Ort entnommen wird, an dem die lebenden Meeresfrüchte (P) geangelt oder gefischt werden.

15. Verfahren nach einem beliebigen der vorstehenden Ansprüche 13 oder 14, wobei, nachdem Meeresfrüchte (P) im lebenden Zustand in jede der Aufnahmen (10) eingeführt wurden, das Verfahren aus Folgendem besteht:
- Einsetzen des Moduls (1) in einen wasserdichten Behälter (6),
- Einleiten von Wasser in den Behälter (6), damit ein Bad gebildet wird, in das das Modul (1) eingetaucht wird, das Wasser kontinuierlich im Behälter umlaufen lassen, damit in jeder der Aufnahmen (10) ein Wasserstrom (F) zwischen ihrem stromaufwärtigen Ende (10a) und ihrem stromabwärtigen Ende (10b) erzeugt wird.

## Claims

1. A system for storing live seafood products, including:
- separate tubular compartments (10) each having an upstream end (10a) and a downstream end (10b), the products of the sea (P) being introduced in the living state in said compartments,
- a hydraulic circuit (41, 42) adapted to generate water circulation in each of the compartments (10),
- an installation (5) adapted to treat the circulating water so as to adapt its composition to the products of the sea (P),
**characterized in that**:
- the tubular compartments (10) are part of at least one module (1) in the form of a block in which said compartments are made, which block is made of a lightweight material so that it can be handled, empty, by an operator, said module being removable with respect to the hydraulic circuit (41, 42) and to the treatment installation (5),
- the tubular compartments (10) have their upstream end (10a) and their downstream end (10b) open, the water flow (F) being generated by the hydraulic circuit entering said compartments through their upstream end (10a) and emerging through their downstream end (10b), the products of the sea (P) being immersed in this water flow,
- the installation (5) is adapted to maintain the water circulating in the compartments (10) at a temperature below 25 °C.

2. The system according to claim 1, wherein several modules (1) are inserted into a watertight container (6), which container is connected to the hydraulic circuit (41, 42) so as to form a bath in which all said modules are immersed, said hydraulic circuit being adapted to generate a water circulation in said container and to create a water flow (F) in each of the compartments (10), between their upstream end (10a) and their downstream end (10b).

3. The system according to claim 2, wherein the modules (1) are juxtaposed and stacked inside the container (6) so as to form adjacent walls (M1, M2) of modules disposed one after the other.

4. The system according to any of claims 2 or 3, wherein some modules (1) have compartments (2) of dimensions different from those of other modules.

5. The system according to any of claims 2 to 4, wherein: the container (6), the hydraulic circuit (41, 42) and the water treatment installation (7) are installed in a 6.10 m (20 feet), 12.19 m (40 feet) or 13.72 m (45 feet) parallelepiped receptacle (7), adapted for transportation by boat or plane.

6. The system according to claim 5, wherein a plurality of containers (6a, 6b, 6c) are juxtaposed inside the receptacle (7), each of said containers being connected to the hydraulic circuit (41, 42).

7. The system according to any of claims 5 or 6, wherein the container (6) and/or the receptacle (7) are isothermal.

8. The system according to any of the preceding claims, wherein the installation (5) is adapted to maintain the water circulating in the compartments (10) at a temperature between 1 °C and 5 °C.

9. The system according to any of the preceding claims, wherein the water treatment installation (5) comprises a buffer tank (50) connected to the hydraulic circuit (41, 42), a cooler (52) being immersed in said tank.

10. The system according to claim 9, wherein the cooler (52) is in the form of an exchanger in which circulates cold air generated by an air conditioner module (53).

11. The system according to any of the preceding claims, wherein each module (1) is in the form of a block in which are made tubular compartments (10) arranged in rows and/or columns and/or a staggered manner.

12. The system according to any of the preceding claims, wherein the downstream end (10b) of each compartment (10) is partially closed by a divisible closure means (11) adapted to prevent the seafood products (P) from exiting said compartment, while allowing passage of the water flow (F).

13. A method for storing live seafood products, consisting of:
- introducing the live seafood products (P) in separate tubular compartments (10) each having an upstream end (10a) and a downstream end (10b),
- generating a water circulation in each of the compartments (10),
- treating the circulating water, so as to adapt its composition to the seafood products (P),
**characterized in that** said method comprises the steps consisting of:
- making the tubular compartments (10) in at least one module (1) in the form of a block, said compartments being made so that their upstream end (10a) and their downstream end (10b) are open, which block is made of lightweight material so that it can be handled, empty, by an operator,
- generating a water flow (F) so that it enters the compartments (10) through their upstream end (10a) and exits through their downstream end (10b), the seafood products (P) being immersed in this water flow (F),
- maintaining the water circulating in the compartment (10) at a temperature below 25 °C.

14. The method according to claim 13, wherein the water is directly taken from the place of fishing or harvesting the products of the live seafood products (P).

15. The method according to any of claims 13 or 14, wherein, after having introduced live seafood products (P) into each of the compartments (10), said method consists in:
- inserting the module (1) into a watertight container (6),
- introducing water into the container (6) so as to form a bath in which the module (1) is immersed, and continuously circulating the water in said container so as to create a water flow (F) in each of the compartments (10), between their upstream end (10a) and their downstream end (10b).
